# EUROPEAN PATENT SPECIFICATION

(11) **EP 4 007 485 B1**
(45) Date of publication and mention of the grant of the patent: **19.11.2025**
(21) Application number: 19783737.0
(22) Date of filing: 02.08.2019
(51) Int. Cl.: A01D 46/26

(54) **PORTABLE SHAKER DEVICE**
TRAGBARE SCHÜTTELVORRICHTUNG
DISPOSITIF AGITATEUR PORTATIF

(43) Date of publication of application: 08.06.2022
(73) Proprietor: Cifarelli S.p.A., 27058 Voghera (Pavia) (IT)
(72) Inventor: CIFARELLI, Roberto, 27058 VOGHERA (PAVIA) (IT)
(74) Representative: Tarabbia, Luigi
(86) International application number: PCT/IT2019/000064
(87) International publication number: WO 2021/024279

(56) References cited:
- EP-A1- 2 042 020
- EP-A1- 2 050 328
- EP-A1- 2 625 948
- WO-A1-2004/074707
- US-A- 3 479 806

## Description

### Technical field

The present invention relates to a portable shaker for gardening or agriculture.

Such portable shaker is particular used within the scope of garden or field care, in particular in cases wherein the aim is to harvest small fruits, such as olives, for example, or to eliminate the dead parts of the plant such as dry leaves, for example.

Normally, the portable shaker is gripped or carried by an operator in such a way as to engage a branch to be shaken by a hooked rod of the shaker itself. Such hooked rod shakes the branch thanks to a vibratory motion along the development direction of the rod itself.

### Background art

A portable shaker is known from the patent EP2042020: such shaker has a hooked rod suitable to engage the branch to be shaken, a moving system of such rod and a compensation system suitable to avoid the vibrations of the shaker along the undesired directions, in particular along directions transverse to the hooked rod.

The moving system presented in EP2042020 comprises a rod-crank mechanism capable of transferring a vibratory motion to the hooked rod: in particular, the rod-crank mechanism is moved by a spark-ignition engine and acts so as to transform the vibrations of the engine into longitudinal oscillations of the hooked rod. Such system therefore serves as a means of internal transmission of the motion from the engine to the rod.

The aforementioned portable shaker and other similar shakers based on the presence of an articulated transmission between the engine and the oscillating/vibrating rod have some structural, operating and economic/manufacturing disadvantages.

Firstly, the rod-crank system used to transform the vibrations of the engine into longitudinal motion of the hooked rod is a complex and expensive mechanism, also making the whole shaker heavy and difficult to handle.

In addition, the use of a spark-ignition engine does not allow a flexible adjustment of the shaker: the only possible adjustment generally takes place by controlling the number of engine revolutions (typically, through a "finger accelerator") and therefore such control mode does not allow to uncouple the frequency of the vibrations from their amplitude.

In addition, the known shakers transmit vibrations to the operators thus causing health problems to the operators themselves. In other words, the use of known shakers, during the fruit harvesting operation or the garden care, can be classified as a strenuous work for the operator.

### Object of the Invention

The technical task of the present invention is therefore to provide a portable shaker which overcomes the drawbacks arisen from the known art.

An object of the present invention is to provide a lighter, easier to handle and more flexible in control portable shaker.

A further object of the present invention is therefore to provide a portable shaker which is simple to operate, and which is capable of reducing production costs.

The specified technical task and the specified objects are substantially achieved by a portable shaker comprising the technical features set out in one or more of the appended claims.

The dependent claims correspond to possible embodiments of the invention.

The specified technical task and the specified objects are substantially achieved by a portable shaker comprising a first rod, a vibrating body and at least one actuation engine.

The first rod of the shaker is configured to shake a branch by vibrating along a vibration direction, preferably coinciding with the longitudinal development direction of the first rod itself.

The vibrating body in turn comprises a casing and a first and a second eccentric masses.

Such casing is integrally connected to one end of the first rod in such a way that it moves integrally with the casing at least along the vibration direction.

The first and second eccentric masses, on the contrary, are movable inside the casing and mutually rotating in antiphase thanks to the action of the at least one actuation engine which is suitable to rotate at least one of the first and second eccentric masses.

The first and second eccentric masses, mutually rotating in antiphase, generate oscillations on the casing in such a way as to cause a vibration of the first rod along the vibration direction.

In other words, the mutual and antiphase rotation of the two eccentric masses causes oscillations on the casing which in turn, being integrally connected to the first rod, causes a vibration of the first rod such as to allow the shaking of a branch.

Thanks to the transmission of vibrations from the casing to the first rod, the latter performs an alternating translational motion along the vibration direction which allows it to shake the branch.

Further features and advantages of the present invention will become more apparent from the indicative, and therefore non-limiting, description of a preferred embodiment of a portable shaker.

### Brief description of the drawings

Such description will be set forth hereinafter with reference to the appended drawings, given only for illustrative and, therefore, non-limiting purpose, wherein:
- Figure 1 shows a side view of the portable shaker;
- Figure 2 shows a bottom view of the portable shaker;
- Figure 3 shows a detail of the portable shaker;
- Figure 4 shows a further detail of the portable shaker;
- Figures 5 and 6 show a partial exploded view and a sectional view along the trace VV of an alternative embodiment of the portable shaker, respectively.

### Detailed description of preferred embodiments of the invention

With reference to the attached figures, "S" refers to a portable shaker. Such shaker "S" comprises a first rod 1, a vibrating body 3 and at least one actuation engine 7.

The first rod 1 is configured to shake a branch by vibrating along a vibration direction 2 preferably coinciding with a development direction of the first rod 1 itself. In particular, the first rod 1 vibrates by translating with alternating motion along the vibration direction 2 in such a way as to shake a branch.

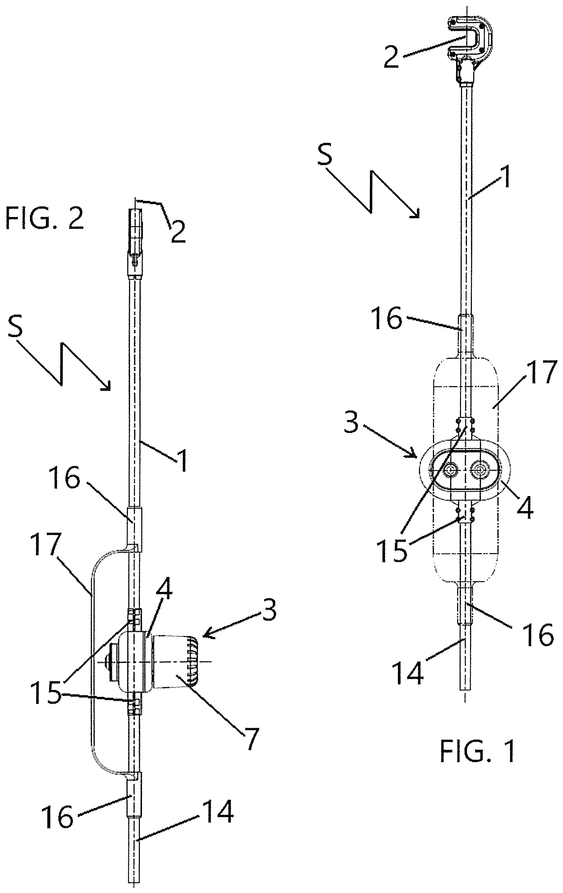

In a preferred embodiment, such as the one shown in Figure 1, for example, the first rod 1 comprises, on one end, a gripping body 18 capable of engaging the branch to shake it. Preferably, as shown in Figure 2, for example, the gripping body 18 is made in the form of a hook having an inverted "U" shape.

In an embodiment not illustrated, the gripping body 18 is made in the form of a gripper and preferably controllable so as to open or close the gripper according to the needs of a user, for example to enclose a fruit to be harvested or a branch to be shaken.

The vibrating body 3 comprises a casing 4 and a first and a second eccentric masses 5 and 6 rotating in antiphase.

In particular, the casing 4 is firmly connected to a further end of the first rod 1 in such a way that the first rod 1, together with the gripping body 18, moves integrally with the casing 4 at least along the vibration direction 2. Preferably, the casing 4 is integrally connected to the first rod 1 through mechanical joints 15.

In this way, when the casing 4 moves, also the first rod 1 moves together with it. In particular, the casing 4 and the first rod 1 translate with alternating motion along the vibration direction 2.

In other words, when the casing 4 is vibrated, also the first rod 1 is integrally brought into vibration by translating forward and backward along its longitudinal development axis, i.e. along the vibration direction 2.

In particular, the first and the second eccentric masses 5 and 6 are movable inside the casing 4 and are suitable to mutually rotate in antiphase to generate an oscillation and thus a vibration of the casing 4. The first eccentric mass 5 rotates alternately occupying an upper portion and an intermediate portion of the casing 4, while the second eccentric mass 6 rotates alternately occupying the intermediate portion and a lower portion of the casing 4.

Such first and second eccentric masses 5 and 6 are shaped in such a way as to be able to interpenetrate each other during their mutual rotation.

The first and the second eccentric masses 5 and 6, therefore, being rotating in counter-phase, interpenetrate each other in the intermediate portion of the casing 4. Intermediate portion of the casing 4 means the area of the casing 4 extending along the vibration direction 2. Preferably, intermediate portion means the internal area of the casing 4 corresponding to the outer portion of the casing 4 itself wherein the mechanical joints 15 are present.

In other words, the first eccentric mass 5 rotates in a sense opposite to the second eccentric mass 6 and with a phase shift of 180° so as to occupy the upper portion of the casing 4 when the second eccentric mass 6 occupies the lower one and *vice versa,* and in such a way as to interpenetrate the second eccentric mass 6 in the intermediate area of the casing 4.

The antiphase mutual rotation of the eccentric masses 5 and 6 causes an oscillation of the casing 4 and consequently a vibration of the first rod 1, the latter is therefore set in motion according to an alternating translational motion having a velocity presenting a sinusoidal profile.

In particular, the mutual rotation of the first and the second eccentric masses 5 and 6 imposes on the casing 4 an inertial effect which is a function of the rotation angle of the eccentric masses 5 and 6 themselves, this in turn causes a vibration of the casing 4, and therefore of the first rod 1, along the vibration direction 2.

Due to the mutual rotation of the first and the second eccentric masses 5 and 6, the casing 4 and the first rod 1 translate with alternating motion along the vibration direction 2 with a velocity profile whose modulus varies for each angular position of the first and the second eccentric masses 5 and 6 in a sinusoidal manner.

Such profile reaches peaks in both translational senses along the vibration direction 2 and at a predetermined angular position of the first and the second eccentric masses 5 and 6.

In particular, when the first and the second eccentric masses 5 and 6 interpenetrate, the translational velocity of the casing 4 along the vibration direction 2 is maximum in each of the two alternating translational senses. On the contrary, when the two eccentric masses 5 and 6 are aligned perpendicularly to the vibration direction 2 (the first eccentric mass 5 in the upper portion of the casing 4 and the second eccentric mass 6 in the lower portion of the casing 4 or *vice versa*) the motion along the vibration direction 2 is zero until the two eccentric masses 5 and 6 continue their rotation causing an inversion in the direction of the translational motion of the casing 4.

In every other angular range of mutual rotation of the first and the second eccentric masses 5 and 6, the translational velocity of the casing 4 along the vibration direction 2 is other than zero, but not constant over time in terms of modulus.

In other words, the mutual and counter-phase rotation of the first and the second eccentric masses 5 and 6 causes the casing 4, together with the first rod 1, to vibrate so as to translate along the vibration direction 2 with a different velocity for each angular position of the eccentric masses 5, 6 such as to retrace a sinusoidal profile and according to a sense that alternates during the rotation of the first and the second eccentric masses 5 and 6.

Advantageously, the mutual rotation motion of the eccentric masses 5 and 6, for every angular position thereof, does not generate vibrations along a transverse direction with respect to the vibration direction 2 avoiding problems related to the incorrect movement of the portable shaker "S", as for example the transmission of vibrations possibly harmful to the operator. The mutual rotation of the first and the second eccentric masses 5 and 6, therefore, promotes an oscillatory motion of the casing 4 and of the first rod 1 and at the same time damps the oscillations along a transverse direction with respect to the vibration direction 2.

Advantageously, the portable shaker "S" object of the present invention is capable of transferring the oscillatory motion of the casing 4, caused by the mutual rotation of the first and the second eccentric masses 5 and 6, to the first rod 1 without the need for transmissions or mechanical hinges interposed between the two eccentric masses 5 and 6 and the first rod 1 itself.

Advantageously, it is also possible, by exploiting the rotation of the first and the second eccentric masses 5 and 6, to avoid the occurrence of vibrations along directions different from the vibration direction 2, in particular along the transverse direction.

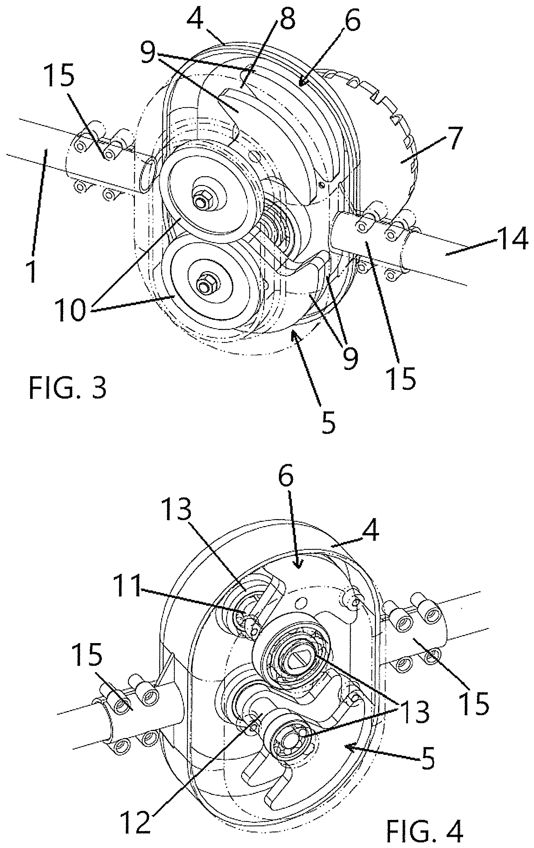

As shown for example in the embodiment of Figure 4, to facilitate the interpenetration of the first and the second eccentric masses 5 and 6, during their mutual rotation motion, the second eccentric mass 6 has an insertion recess 8 capable of accommodating the first eccentric mass 5 at predetermined angular ranges of the rotation, in particular at the intermediate portion of the casing 4.

Preferably, the first and/or second eccentric masses 5 and/or 6 are formed by two modular elements 9 each. For example, the second eccentric mass 6 has the two modular elements 9 spaced apart from each other in such a way as to define the insertion recess 8 for the first eccentric mass 5.

Preferably, the first eccentric mass 5 has the two modular elements 9 juxtaposed so as to be in contact with one another.

In an embodiment not illustrated, the first eccentric mass 5 has a centre distance between the two modular elements 9 that is lower than the width of the insertion recess 8 in such a way that the first eccentric mass 5 can in any case fit in such insertion recess 8 during rotation.

In a further embodiment not illustrated, the first eccentric mass 5 has a single modular element 9.

In a further embodiment not illustrated, the first and the second eccentric masses 5 and 6 may have a plurality of modular elements 9 positioned so as to interpenetrate each other during the mutual rotation motion. For example, the modular elements 9 of the second eccentric mass 6 can be spaced apart from each other so as to define a plurality of insertion recesses 8 which are capable of allowing the insertion of the modular elements 9 of the first eccentric mass 5 (also spaced apart from each other in order to fit in the aforementioned plurality of insertion recesses 8). In a further embodiment not illustrated, the first and the second eccentric masses 5 and 6 are made in the form of two unbalanced engines, i.e. presenting an uneven mass distribution.

As shown for example in Figures 3 and 4, the first and the second eccentric masses 5 and 6 have a substantially anchor shape. Preferably, each modular element 9 of the first and the second eccentric masses 5 and 6 has such substantially anchor shape.

Anchor shape means that there is an arcuate portion and a stem connecting the arcuate portion with a spoke portion suitable to connect to a shaft, if present, pivoted to the casing.

In a possible embodiment, indeed, the portable shaker "S" comprises a first and a second shaft 11 and 12 suitable to support the first and the second eccentric masses 5 and 6 during rotation, respectively. In particular, the first and the second shafts 11 and 12 are symmetrically pivoted within the casing 4 with respect to the vibration direction 2 and develop along a direction perpendicular to the vibration direction 2 itself. Each end of the first and the second shafts 11 and 12 then has bearings 13, preferably ball shaped, suitable to support the shafts 11 and 12 during rotation.

Preferably, in a further possible embodiment, the portable shaker "S" can further comprise synchronization means 10 of the mutual rotation of the first and the second eccentric masses 5 and 6 in such a way that the two eccentric masses 5 and 6 rotate in antiphase.

In other words, such synchronization means 10 engage at least partially with respect to each other and counter rotate so as to couple the movement of the first eccentric mass 5 with the one of the second eccentric mass 6 or *vice versa.*

In a possible embodiment, such synchronization means are mounted on respective ends of the first and the second shafts 11 and 12.

In other words, the eccentric masses 5 and 6 are mounted on the shafts 11 and 12 so as to rotate with them and are synchronized in antiphase by the synchronization means 10.

Preferably, the synchronization means 10 are made in the form of disc-shaped elements configured to frictionally engage in such a way as to transmit the rotation motion between the first and the second shafts 11 and 12.

In a further embodiment, not illustrated, the synchronization means 10 are made in the form of cylindrical gears configured to mesh in such a way as to transmit the rotation motion between the first and the second shafts 11 and 12.

In an embodiment not illustrated, the first and the second eccentric masses 5 and 6 rotate, on the contrary, due to an electromagnetic effect, therefore without the need of being mounted on shafts.

The shaker "S" also comprises at least one actuation engine 7, suitable to rotate at least one of the first and the second eccentric masses 5 and 6. In this way, the actuation engine 7 causes the mutual rotation of the first and the second eccentric masses 5 and 6.

Therefore, when the portable shaker "S" is in use, the actuation engine 7 mutually rotates the two eccentric masses 5 and 6 which are synchronized to rotate in antiphase by the synchronization means 10.

The mutual rotary motion of the first and the second eccentric masses 5 and 6 causes oscillations on the casing 4 which result in an alternating translational motion of the casing 4. Since the casing 4 is integrally connected, for example through the mechanical joints 15, with the first rod 1, it also vibrates according to an alternating translational motion along the translational direction 2.

In the case that the first and the second shafts 11 and 12 are present, the actuation engine 7 can actuate the first or the second shafts 11 and 12 so as to engage with respect to each other the synchronization means 10 and so as to rotate the two eccentric masses 5 and 6 to generate the oscillatory motion of the casing 4.

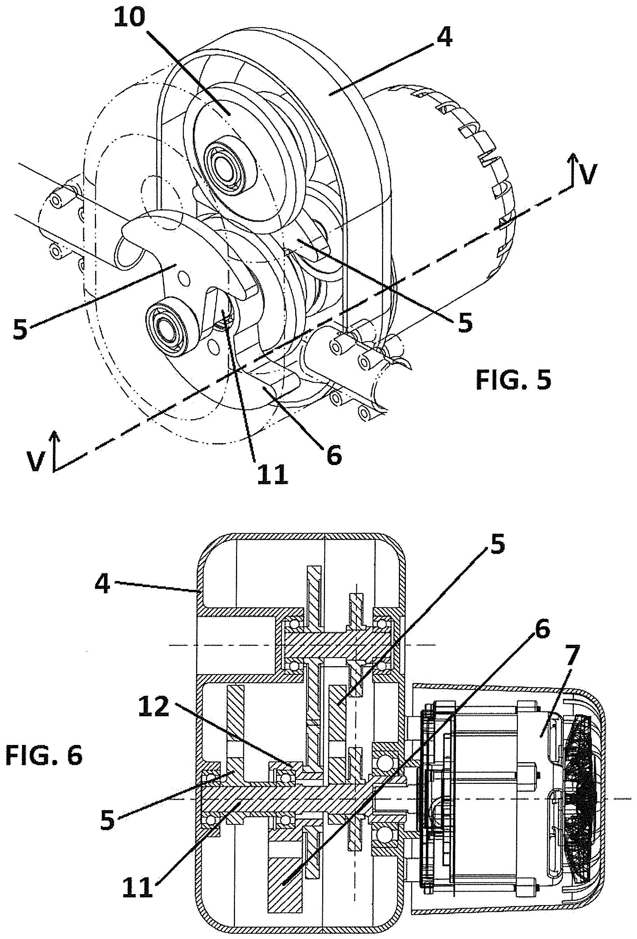

In the alternative embodiment illustrated in Figures 5 and 6, within the shaker are always present a first shaft 11 and a second shaft 12 pivoted within the casing 4, but in this case they are coaxially arranged with respect to each other (although still developing along a direction transverse to the vibration direction): the first eccentric mass 5 and the second eccentric mass 6, in turn, are mounted on the first shaft 11 and on the second shaft 12 respectively, rotating in mutual antiphase around an axis common to the first shaft 11 and to the second shaft 12 (such common axis is, in practice, the geometric rotation axis coinciding between the two coaxial and counter-rotating shafts).

Conveniently, in this alternative embodiment of the shaker "S", the rotation synchronization means 10 are suitable to determine a relative counterrotation between the first shaft 11 and the second shaft 12, in addition to maintaining the aforementioned antiphase relationship for the relative rotations of the two eccentric masses 5 and 6.

In an embodiment not illustrated, an actuation engine 7 for each shaft 11 and 12 is present. In other words, in such embodiment each actuation engine 7 is configured to rotate the respective shaft 11, 12 so as to reciprocally rotate the two eccentric masses 5 and 6.

Preferably, the actuation engine 7 or the actuation engines 7 are electric engines comprising control means (not illustrated in the attached figures), for example of the electronic type, capable of carrying out advanced control strategies and of synchronizing the rotation of the actuation engines 7, and therefore of the first and the second eccentric masses 5 and 6.

In particular, the introduction of the control means allows to determine at least an amplitude and/or a frequency and/or a wavelength of the vibration of the casing 4. In other words, the control means allow to control one or more of the above parameters in order to adjust the vibration of the casing 4 and therefore of the first rod 1.

The control means can also allow the amplitude, frequency and wavelength of the vibration to be uncoupled. In this way the control means allow to use the portable shaker "S" in a more accurate manner.

For example, if the aim is to make the light parts of the plant fall, such as the dry leaves, the control means will ensure that the amplitude of the vibration is reduced, and its frequency is increased. On the contrary, if the aim is to make heavy parts of the plant fall, such as the fruits, for example, the control means will ensure that the amplitude of the vibration is increased, and its frequency is reduced.

In the case that the portable shaker "S" includes the two actuation engines 7 (as previously described), the control means can maintain a phase relationship between the two actuation engines 7. Preferably, the control means are suitable to maintain an antiphase relationship between the two actuation engines 7 and therefore between the first and the second eccentric masses 5 and 6. In this way, the control means allow to guarantee the proper operation of the portable shaker "S" ensuring the proper vibration of the vibrating body 3 and therefore of the first rod 1.

The control means are also used to carry out a series of typical preventive maintenance controls, for example it is possible to measure the current of the actuation engine 7 based on a given output, in this way it is possible to control whether any component of the system is losing efficiency.

The control means also allow to carry out pre-set autonomy programs, for example, suitable to optimize battery consumption, to efficiently adjust the power of the actuation engine 7 or suitable to prevent long exposures of an operator to a given regime of vibrations.

These control features made possible by the implementation of an electric engine 7 together with control means, can also be realized independently from the other structural features described and claimed of the present invention.

Advantageously, the portable shaker "S" having the electric actuation engine 7 and equipped with control means is more flexible and optimized with respect to a portable shaker comprising a spark-ignition engine.

To better carry the portable shaker "S", as in the illustrated embodiment, for example, such portable shaker "S" further comprises a second rod 14 arranged coaxially to the first rod 1.

Such second rod 14 is also connected to the casing 4, preferably in an integral manner with it and, even more preferably, through a mechanical joint 15, in such a way that the vibrating body 3 is interposed between the first and the second rods 1 and 14.

In this way, an operator grips the first rod 1 with one hand and the second rod 14 with a second hand in such a way as to support more comfortably the weight given by the vibrating body 3 interposed between the first and the second rods 1 and 14.

To make it even easier to use the portable shaker "S" object of the present invention, handling means 16 are provided comprising a first handgrip axially slidable along the first rod 1. In addition, a second handgrip axially slidable along the second rod 14 can also be present so as to facilitate the grip by the operator of such portable shaker "S".

Advantageously, such handgrips 16 allow to obtain a further damping of the vibrations transmitted to the operator and, in addition, they are easy to produce and to assemble, presenting at the same time a high level of ergonomics.

As shown in Figures 1 and 2, the portable shaker "S" also includes a protection device 17 developing between the first and the second handgrips in such a way as to avoid direct contact between the portable shaker "S" and the operator during the use of the portable shaker "S" itself. In the embodiment shown in the attached figures, the protection device 17 has a substantially rectangular shape. In particular, the protection device 17 has an extension such as to shield the casing 4 at least along a lateral portion thereof that would otherwise come into contact with one side of the operator.

In the embodiment shown in the attached figures, the protection device 17 is positioned on the opposite side of the casing 4 with respect to the one where the actuation engine 7 is positioned.

The present invention achieves the intended objects, eliminating the drawbacks highlighted in the known art.

In fact, the structure of the portable shaker "S" as described (in one or more of the above embodiments) and claimed allows to obtain a vibration motion of the first rod 1, and therefore the shaking of a branch, thanks only to the effect caused by the mutual and antiphase rotation of the first and the second eccentric masses 5 and 6 eliminating any mechanical transmission mechanism of the rod-crank type.

In other words, the first rod 1 vibrates along the vibration direction 2 thanks to the fact that it is integrally connected to the casing 4 which is in turn vibrated by the rotation of the two eccentric masses 5 and 6.

This results in several advantages, starting from the fact that the portable shaker "S" is lighter and less cumbersome since the rod-crank mechanism is absent.

A further advantage is given by the fact that, by eliminating the rod-crank transmission, the shaker needs less maintenance.

A further advantage is given by the fact that the costs for the production of the portable shaker "S" are considerably reduced.

A further advantage is given by the fact that the system of the rotating eccentric masses serves simultaneously as a generator of vibrations along the vibration direction 2 and as a balancer of unwanted transverse vibrations.

A further advantage is given by the fact that the simplicity and the very small number of moving members within the casing/machine body, as well as the fact that no transmission linkage converting circular motions into alternative motions is provided, enable a significant simplification in terms of lubrication: typically, grease can simply be used instead of oil, thus saving weight, costs and complexity of an oil lubrication system which, on the contrary, is typical of portable shakers of the known type.

A further advantage is also given by the fact that the significant simplification of the components inside the casing/machine body also results in a significant reduction of the heat generated by friction within the casing/machine body itself, to the whole advantage of the handling ergonomics by the user and of the total duration of the components of the invention.

A further advantage is given by the fact that the use of one or more electric actuation engines 7, in combination with the control means, allow to optimize the working regime of the portable shaker "S".

Even more advantageously, the shaker "S" allows to reduce the vibrations transmitted to the operator thus being safer for the health of the operator itself.

## Claims

1. Portable shaker (S) for gardening or agriculture comprising:
- a first rod (1) configured to shake a branch by vibrating along a vibration direction (2) preferably coinciding with a development direction of said first rod (1);
- a vibrating body (3) comprising:
- a casing (4); and
- a first and a second eccentric masses (5 and 6) movable inside said casing (4) and suitable to mutually rotate in antiphase, and
- at least one actuation engine (7) suitable to rotate at least one of said first and second eccentric masses (5 and 6),
**characterized in that**
- said casing (4) is integrally connected to one end of said first rod (1), said first rod (1) moving integrally with said casing (4) at least along said vibration direction (2); and
- said first and second eccentric masses (5 and 6) are configured to generate oscillations of said casing (4), said first rod (1) vibrating along said vibration direction (2).

2. Portable shaker (S) according to claim 1, wherein said first and second eccentric masses (5 and 6) are shaped in such a way as to be able to interpenetrate each other during said mutual rotation.

3. Portable shaker (S) according to claim 1 or 2, wherein said second eccentric mass (6) has an insertion recess (8) suitable to accommodate said first eccentric mass (5) at predetermined angular ranges of said mutual rotation.

4. Portable shaker (S) according to one or more of the preceding claims, wherein said first eccentric mass (5) and said second eccentric mass (6) each comprise a plurality of modular elements (9), preferably said first and second eccentric masses (5 and 6) each comprising at least two modular elements (9).

5. Portable shaker (S) according to claims 3 and 4, wherein said second eccentric mass (6) is formed by a predetermined number of modular elements (9) having a mutual distance suitable to define said insertion recess (8).

6. Portable shaker (S) according to one or more of the preceding claims, wherein said first and second eccentric masses (5 and 6) have a substantially anchor shape.

7. Portable shaker (S) according to one or more of the preceding claims, comprising synchronization means (10) of the mutual rotation of said first and of said second eccentric masses (5 and 6), said synchronization means (10) being at least partially engaged with respect to each other and counter-rotating so as to couple the rotation movement of said first eccentric mass (5) with the rotation movement of said second eccentric mass (6) or *vice versa.*

8. Portable shaker (S) according to claim 7, wherein said synchronization means (10) comprise cylindrical gears meshed with respect to each other so as to couple the rotation movement of said first eccentric mass (5) with the rotation movement of said second mass eccentric (6) or *vice versa,* said cylindrical gears being connected to the first eccentric mass (5) and to the second eccentric mass (6), respectively.

9. Portable shaker (S) according to claim 7, wherein the rotation synchronization means (10) are made in the form of disc-shaped elements frictionally engaged with respect to each other so as to couple the rotation movement of said first eccentric mass (5) with the rotation movement of said second eccentric mass (6) or *vice versa,* said disc-shaped elements being connected to the first eccentric mass (5) and to the second eccentric mass (6), respectively.

10. Portable shaker (S) according to one or more of the preceding claims, comprising a first shaft (11) and a second shaft (12) pivoted within said casing (4) and symmetrically arranged with respect to said vibration direction (2), said first shaft (11) and said second shaft (12) developing along a direction transverse to said vibration direction (2), said first eccentric mass (5) being mounted on said first shaft (11) and said second eccentric mass (6) being mounted on said second shaft (12).

11. Portable shaker (S) according to claims 7 and 10, wherein said rotation synchronization means (10) are mounted on ends of said first shaft (11) and of said second shaft (12), respectively.

12. Portable shaker (S) according to one or more of the preceding claims 1 to 9, comprising a first shaft (11) and a second shaft (12) pivoted within said casing (4) and coaxially arranged with respect to each other, said first shaft (11) and said second shaft (12) developing along a direction transverse to said vibration direction (2), said first eccentric mass (5) being mounted on said first shaft (11) and said second eccentric mass (6) being mounted on said second shaft (12), the first eccentric mass (5) and the second eccentric mass (6) rotating in antiphase around an axis common to the first shaft (11) and to the second shaft (12).

13. Portable shaker (S) according to claim 12, wherein said rotation synchronization means (10) are suitable to determine a relative counterrotation between the first shaft (11) and the second shaft (12).

14. Portable shaker (S) according to any one of the preceding claims 7 to 13, wherein on each end of said first shaft (11) and said second shaft (12) bearings (13), preferably ball bearings, are mounted, suitable to support said first shaft (11) and said second shaft (12) during rotation.

15. Portable shaker (S) according to one or more of the preceding claims, comprising a second rod (14) arranged coaxially to said first rod (1) and connected, preferably in an integral manner, to said casing (4) in such a way that said vibrating body (3) is interposed between said first rod (1) and said second rod (14).

16. Portable shaker (S) according to claim 15, wherein said first rod (1) and said second rod (14) are connected to said casing (4) by mechanical joints (15).

17. Portable shaker (S) according to one or more of the preceding claims, comprising handling means (16), said handling means (16) comprising a first handgrip axially slidable along said first rod (1).

18. Portable shaker (S) according to claims 16 and 17, comprising a second handgrip axially slidable along said second rod (14).

19. Portable shaker (S) according to claim 18, comprising a protection device (17) developing between said first handgrip and said second handgrip, said protection device (17) being suitable to avoid direct contact between said vibrating body (3) and an operator when said portable shaker (S) is in use.

20. Portable shaker (S) according to one or more of the preceding claims, wherein said first rod (1) comprises, on a further end, a gripping body (18) suitable to engage said branch to shake it, said gripping body (18) preferably comprising a gripper and/or a hook with an inverted "U" shape.

21. Portable shaker (S) according to one or more of the preceding claims, wherein said at least one actuation engine (7) is an electric engine.

22. Portable shaker (S) according to claim 21, comprising control means of said at least one electric engine, preferably of the electronic type, suitable to determine at least:
- an amplitude of said vibration; and/or
- a frequency of said vibration; and/or
- a wavelength of said vibration; and/or
- an uncoupling of said amplitude and said frequency and said wavelength of said vibration of the first rod (1).

23. Portable shaker (S) according to one or more of the preceding claims, wherein said shaker comprises at least two actuation engines (7) suitable to rotate said first and second eccentric masses (5 and 6), respectively, in such a way that said first and second eccentric masses (5 and 6) rotate in antiphase.

24. Portable shaker (S) according to claims 22 and 23, wherein said control means are suitable to maintain a phase relationship of said two actuation engines (7), preferably an antiphase relationship.

## Patentansprüche

1. Tragbare Schüttelvorrichtung (S) für den Gartenbau oder die Landwirtschaft, umfassend:
- eine erste Stange (1), die konfiguriert ist, um einen Zweig durch Vibration entlang einer Vibrationsrichtung (2) zu schütteln, die vorzugsweise mit einer Entwicklungsrichtung der ersten Stange (1) übereinstimmt;
- einen Vibrationskörper (3), umfassend:
- ein Gehäuse (4); und
- eine erste und eine zweite exzentrische Masse (5 und 6), die innerhalb des Gehäuses (4) beweglich und geeignet sind, sich gegenphasig zu drehen, und
- mindestens einen Betätigungsmotor (7), der geeignet ist, mindestens eine der ersten und zweiten exzentrischen Masse (5 und 6) zu drehen,
**dadurch gekennzeichnet, dass**
- das Gehäuse (4) einstückig mit einem Ende der ersten Stange (1) verbunden ist, wobei sich die erste Stange (1) einstückig mit dem Gehäuse (4) zumindest entlang der Vibrationsrichtung (2) bewegt; und
- die erste und zweite exzentrische Masse (5 und 6) konfiguriert sind, um Schwingungen des Gehäuses (4) zu erzeugen, wobei die erste Stange (1) entlang der Vibrationsrichtung (2) vibriert.

2. Tragbare Schüttelvorrichtung (S) nach Anspruch 1, wobei die erste und zweite exzentrische Masse (5 und 6) so geformt sind, dass sie sich während der gegenseitigen Rotation gegenseitig durchdringen können.

3. Tragbare Schüttelvorrichtung (S) nach Anspruch 1 oder 2, wobei die zweite exzentrische Masse (6) eine Einführungsaussparung (8) aufweist, die geeignet ist, die erste exzentrische Masse (5) in vorbestimmten Winkelbereichen der gegenseitigen Rotation aufzunehmen.

4. Tragbare Schüttelvorrichtung (S) nach einem oder mehreren der vorhergehenden Ansprüche, wobei die erste exzentrische Masse (5) und die zweite exzentrische Masse (6) jeweils eine Vielzahl von modularen Elementen (9) umfassen, wobei vorzugsweise die erste und zweite exzentrische Masse (5 und 6) jeweils mindestens zwei modulare Elemente (9) umfassen.

5. Tragbare Schüttelvorrichtung (S) nach den Ansprüchen 3 und 4, wobei die zweite exzentrische Masse (6) durch eine vorbestimmte Anzahl von Modulelementen (9) gebildet wird, die einen gegenseitigen Abstand aufweisen, der geeignet ist, die Einführungsaussparung (8) zu definieren.

6. Tragbare Schüttelvorrichtung (S) nach einem oder mehreren der vorhergehenden Ansprüche, wobei die erste und zweite exzentrische Masse (5 und 6) eine im Wesentlichen Ankerform aufweisen.

7. Tragbare Schüttelvorrichtung (S) nach einem oder mehreren der vorhergehenden Ansprüche, die Synchronisationsmittel (10) für die gegenseitige Rotation der ersten und der zweiten exzentrischen Masse (5 und 6) umfasst, wobei die Synchronisationsmittel (10) zumindest teilweise miteinander in Eingriff stehen und sich gegenläufig drehen, um die Rotationsbewegung der ersten exzentrischen Masse (5) mit der Rotationsbewegung der zweiten exzentrischen Masse (6) oder umgekehrt zu koppeln.

8. Tragbare Schüttelvorrichtung (S) nach Anspruch 7, wobei die Synchronisationsmittel (10) zylindrische Zahnräder umfassen, die sich ineinander kämmen, um die Rotationsbewegung der ersten exzentrischen Masse (5) mit der Rotationsbewegung der zweiten exzentrischen Masse (6) oder umgekehrt zu koppeln, wobei die zylindrischen Zahnräder jeweils mit der ersten exzentrischen Masse (5) und der zweiten exzentrischen Masse (6) verbunden sind.

9. Tragbare Schüttelvorrichtung (S) nach Anspruch 7, wobei die Rotationssynchronisationsmittel (10) in Form von scheibenförmigen Elementen ausgebildet sind, die reibschlüssig miteinander eingegriffen sind, um die Rotationsbewegung der ersten exzentrischen Masse (5) mit der Rotationsbewegung der zweiten exzentrischen Masse (6) oder umgekehrt zu koppeln, wobei die scheibenförmigen Elemente mit der ersten exzentrischen Masse (5) bzw. mit der zweiten exzentrischen Masse (6) verbunden sind.

10. Tragbare Schüttelvorrichtung (S) nach einem oder mehreren der vorhergehenden Ansprüche, umfassend eine erste Welle (11) und eine zweite Welle (12), die innerhalb des Gehäuses (4) schwenkbar gelagert und symmetrisch in Bezug auf die Vibrationsrichtung (2) angeordnet sind, wobei sich die erste Welle (11) und die zweite Welle (12) entlang einer Richtung quer zur Vibrationsrichtung (2) entwickeln, wobei die erste exzentrische Masse (5) auf der ersten Welle (11) montiert ist und die zweite exzentrische Masse (6) auf der zweiten Welle (12) montiert ist.

11. Tragbare Schüttelvorrichtung (S) nach Anspruch 7 und 10, wobei die Rotationssynchronisationsmittel (10) an Enden der ersten Welle (11) bzw. der zweiten Welle (12) montiert sind.

12. Tragbare Schüttelvorrichtung (S) nach einem oder mehreren der vorhergehenden Ansprüche 1 bis 9, umfassend eine erste Welle (11) und eine zweite Welle (12), die innerhalb des Gehäuses (4) schwenkbar gelagert und koaxial zueinander angeordnet sind, wobei sich die erste Welle (11) und die zweite Welle (12) entlang einer Richtung quer zur Vibrationsrichtung (2) entwickeln, wobei die erste exzentrische Masse (5) auf der ersten Welle (11) montiert ist und die zweite exzentrische Masse (6) auf der zweiten Welle (12) montiert ist, wobei sich die erste exzentrische Masse (5) und die zweite exzentrische Masse (6) gegenphasig um eine Achse drehen, die der ersten Welle (11) und der zweiten Welle (12) gemeinsam ist.

13. Tragbare Schüttelvorrichtung (S) nach Anspruch 12, wobei die Rotationssynchronisationsmittel (10) geeignet sind, eine relative Gegenrotation zwischen der ersten Welle (11) und der zweiten Welle (12) herbeizuführen.

14. Tragbare Schüttelvorrichtung (S) nach einem der vorhergehenden Ansprüche 7 bis 13, wobei an jedem Ende der ersten Welle (11) und der zweiten Welle (12) Lager (13), vorzugsweise Kugellager, montiert sind, die geeignet sind, die erste Welle (11) und die zweite Welle (12) während der Rotation zu stützen.

15. Tragbare Schüttelvorrichtung (S) nach einem oder mehreren der vorhergehenden Ansprüche, umfassend eine zweite Stange (14), die koaxial zur ersten Stange (1) angeordnet und vorzugsweise einstückig mit dem Gehäuse (4) verbunden ist, derart, dass der Vibrationskörper (3) zwischen der ersten Stange (1) und der zweiten Stange (14) eingefügt ist.

16. Tragbare Schüttelvorrichtung (S) nach Anspruch 15, wobei die erste Stange (1) und die zweite Stange (14) durch mechanische Gelenke (15) mit dem Gehäuse (4) verbunden sind.

17. Tragbare Schüttelvorrichtung (S) nach einem oder mehreren der vorhergehenden Ansprüche, umfassend ein Handhabungsmittel (16), wobei das Handhabungsmittel (16) einen ersten Handgriff umfasst, der axial entlang der ersten Stange (1) verschiebbar ist.

18. Tragbare Schüttelvorrichtung (S) nach den Ansprüchen 16 und 17, umfassend einen zweiten Handgriff, der axial entlang der zweiten Stange (14) verschiebbar ist.

19. Tragbare Schüttelvorrichtung (S) nach Anspruch 18, umfassend eine Schutzvorrichtung (17), die sich zwischen dem ersten Handgriff und dem zweiten Handgriff entwickelt, wobei die Schutzvorrichtung (17) geeignet ist, einen direkten Kontakt zwischen dem Vibrationskörper (3) und einem Bediener zu vermeiden, wenn die tragbare Schüttelvorrichtung (S) in Gebrauch ist.

20. Tragbare Schüttelvorrichtung (S) nach einem oder mehreren der vorhergehenden Ansprüche, wobei die erste Stange (1) an einem weiteren Ende einen Greifkörper (18) umfasst, der geeignet ist, mit dem Zweig in Eingriff zu kommen, um ihn zu schütteln, wobei der Greifkörper (18) vorzugsweise einen Greifer und/oder einen Haken mit einer umgekehrten "U"-Form umfasst.

21. Tragbare Schüttelvorrichtung (S) nach einem oder mehreren der vorhergehenden Ansprüche, wobei der mindestens eine Betätigungsmotor (7) ein Elektromotor ist.

22. Tragbare Schüttelvorrichtung (S) nach Anspruch 21, umfassend Steuermittel des mindestens einen Elektromotors, vorzugsweise vom elektronischen Typ, die geeignet sind, mindestens zu bestimmen:
- eine Amplitude der Vibration; und/oder
- eine Frequenz der Vibration; und/oder
- eine Wellenlänge der Vibration; und/oder
- eine Entkopplung der Amplitude, der Frequenz und der Wellenlänge der Vibration der ersten Stange (1).

23. Tragbare Schüttelvorrichtung (S) nach einem oder mehreren der vorhergehenden Ansprüche, wobei die Schüttelvorrichtung mindestens zwei Betätigungsmotoren (7) umfasst, die geeignet sind, die erste bzw. zweite exzentrische Masse (5 und 6) auf eine solche Weise zu drehen, dass sich die erste und zweite exzentrische Masse (5 und 6) gegenphasig drehen.

24. Tragbare Schüttelvorrichtung (S) nach den Ansprüchen 22 und 23, wobei die Steuermittel geeignet sind, eine Phasenbeziehung der zwei Betätigungsmotoren (7) aufrechtzuerhalten, vorzugsweise eine gegenphasige Beziehung.

## Revendications

1. Agitateur portable (S) pour le jardinage ou l'agriculture comprenant :
- une première tige (1) configurée pour secouer une branche en vibrant le long d'une direction de vibration (2) coïncidant de préférence avec une direction de développement de ladite première tige (1) ;
- un corps vibrant (3) comprenant :
- une enveloppe (4) ; et
- une première et seconde masses excentriques (5 et 6) mobiles à l'intérieur de ladite enveloppe (4) et pouvant tourner mutuellement en antiphase, et
- au moins un moteur d'actionnement (7) pouvant faire tourner au moins l'une desdites première et seconde masses excentriques (5 et 6),
**caractérisé en ce que**
- ladite enveloppe (4) est intégralement reliée à une extrémité de ladite première tige (1), ladite première tige (1) se déplaçant intégralement avec ladite enveloppe (4) au moins le long de ladite direction de vibration (2) ; et
- lesdites première et seconde masses excentriques (5 et 6) sont configurées pour générer des oscillations de ladite enveloppe (4), ladite première tige (1) vibrant le long de ladite direction de vibration (2).

2. Agitateur portatif (S) selon la revendication 1, dans lequel lesdites première et seconde masses excentriques (5 et 6) sont façonnées de manière à pouvoir s'interpénétrer au cours de ladite rotation mutuelle.

3. Agitateur portatif (S) selon la revendication 1 ou 2, dans lequel ladite seconde masse excentrique (6) présente une cavité d'insertion (8) pouvant recevoir ladite première masse excentrique (5) dans des plages angulaires prédéterminées de ladite rotation mutuelle.

4. Agitateur portatif (S) selon l'une ou plusieurs des revendications précédentes, dans lequel ladite première masse excentrique (5) et ladite seconde masse excentrique (6) comprennent chacune une pluralité d'éléments modulaires (9), de préférence lesdites première et seconde masses excentriques (5 et 6) comprenant chacune au moins deux éléments modulaires (9).

5. Agitateur portatif (S) selon les revendications 3 et 4, dans lequel ladite seconde masse excentrique (6) est formée par un nombre prédéterminé d'éléments modulaires (9) ayant une distance mutuelle appropriée pour définir ladite cavité d'insertion (8).

6. Agitateur portatif (S) selon l'une ou plusieurs des revendications précédentes, dans lequel lesdites première et seconde masses excentriques (5 et 6) ont une forme sensiblement d'ancre.

7. Agitateur portatif (S) selon l'une ou plusieurs des revendications précédentes, comportant des moyens de synchronisation (10) de la rotation mutuelle desdites première et seconde masses excentriques (5 et 6), lesdits moyens de synchronisation (10) étant au moins partiellement engagés l'un par rapport à l'autre et contrarotatifs de manière à coupler le mouvement de rotation de ladite première masse excentrique (5) avec le mouvement de rotation de ladite seconde masse excentrique (6) ou vice versa.

8. Agitateur portable (S) selon la revendication 7, dans lequel lesdits moyens de synchronisation (10) comprennent des engrenages cylindriques engrenés les uns par rapport aux autres de manière à coupler le mouvement de rotation de ladite première masse excentrique (5) avec le mouvement de rotation de ladite seconde masse excentrique (6) ou vice versa, lesdits engrenages cylindriques étant reliés à la première masse excentrique (5) et à la seconde masse excentrique (6), respectivement.

9. Agitateur portatif (S) selon la revendication 7, dans lequel les moyens de synchronisation de la rotation (10) se présentent sous la forme d'éléments en forme de disque engagés par friction les uns par rapport aux autres de manière à coupler le mouvement de rotation de ladite première masse excentrique (5) avec le mouvement de rotation de ladite seconde masse excentrique (6) ou vice versa, lesdits éléments en forme de disque étant reliés à la première masse excentrique (5) et à la seconde masse excentrique (6), respectivement.

10. Agitateur portatif (S) selon l'une ou plusieurs des revendications précédentes, comprenant un premier arbre (11) et un second arbre (12) pivotés à l'intérieur de ladite enveloppe (4) et disposés symétriquement par rapport à ladite direction de vibration (2), ledit premier arbre (11) et ledit second arbre (12) se développant selon une direction transversale à ladite direction de vibration (2), ladite première masse excentrique (5) étant montée sur ledit premier arbre (11) et ladite seconde masse excentrique (6) étant montée sur ledit second arbre (12).

11. Agitateur portatif (S) selon les revendications 7 et 10, dans lequel lesdits moyens de synchronisation de la rotation (10) sont montés sur les extrémités dudit premier arbre (11) et dudit second arbre (12), respectivement.

12. Agitateur portable (S) selon l'une ou plusieurs des revendications précédentes 1 à 9, comprenant un premier arbre (11) et un second arbre (12) pivotés à l'intérieur de ladite enveloppe (4) et disposés coaxialement l'un par rapport à l'autre, ledit premier arbre (11) et ledit second arbre (12) se développant selon une direction transversale à ladite direction de vibration (2), ladite première masse excentrique (5) étant montée sur ledit premier arbre (11) et ladite seconde masse excentrique (6) étant montée sur ledit second arbre (12), la première masse excentrique (5) et la seconde masse excentrique (6) tournant en antiphase autour d'un axe commun au premier arbre (11) et au second arbre (12).

13. Agitateur portatif (S) selon la revendication 12, dans lequel lesdits moyens de synchronisation de la rotation (10) peuvent déterminer une contre-rotation relative entre le premier arbre (11) et le second arbre (12).

14. Agitateur portatif (S) selon l'une quelconque des revendications précédentes 7 à 13, dans lequel à chaque extrémité dudit premier arbre (11) et dudit second arbre (12) sont montés des paliers (13), de préférence des roulements à billes, pouvant supporter ledit premier arbre (11) et ledit second arbre (12) pendant la rotation.

15. Agitateur portatif (S) selon l'une ou plusieurs des revendications précédentes, comprenant une seconde tige (14) disposée coaxialement à ladite première tige (1) et reliée, de préférence de manière solidaire, à ladite enveloppe (4) de telle sorte que ledit corps vibrant (3) soit interposé entre ladite première tige (1) et ladite seconde tige (14).

16. Agitateur portatif (S) selon la revendication 15, dans lequel ladite première tige (1) et ladite seconde tige (14) sont reliées à ladite enveloppe (4) par des joints mécaniques (15).

17. Agitateur portatif (S) selon l'une ou plusieurs des revendications précédentes, comprenant des moyens de manutention (16), lesdits moyens de manutention (16) comprenant une première poignée coulissant axialement le long de ladite première tige (1).

18. Agitateur portatif (S) selon les revendications 16 et 17, comprenant une seconde poignée coulissant axialement le long de ladite seconde tige (14).

19. Agitateur portatif (S) selon la revendication 18, comprenant un dispositif de protection (17) se développant entre ladite première poignée et ladite seconde poignée, ledit dispositif de protection (17) pouvant éviter un contact direct entre ledit corps vibrant (3) et un opérateur lorsque ledit agitateur portatif (S) est en cours d'utilisation.

20. Agitateur portatif (S) selon l'une ou plusieurs des revendications précédentes, dans lequel ladite première tige (1) comprend, à une autre extrémité, un corps de préhension (18) pouvant s'engager dans ladite branche pour la secouer, ledit corps de préhension (18) comprenant de préférence une pince et/ou un crochet en forme de "U" inversé.

21. Agitateur portatif (S) selon l'une ou plusieurs des revendications précédentes, dans lequel ledit au moins un moteur d'actionnement (7) est un moteur électrique.

22. Agitateur portatif (S) selon la revendication 21, comprenant des moyens de commande dudit au moins un moteur électrique, de préférence du type électronique, pouvant déterminer au moins :
- une amplitude de ladite vibration ; et/ou
- une fréquence de ladite vibration ; et/ou
- une longueur d'onde de ladite vibration ; et/ou
- un découplage de ladite amplitude, de ladite fréquence et de ladite longueur d'onde de ladite vibration de la première tige (1).

23. Agitateur portatif (S) selon l'une ou plusieurs des revendications précédentes, dans lequel ledit agitateur comprend au moins deux moteurs d'actionnement (7) pouvant faire tourner lesdites première et seconde masses excentriques (5 et 6), respectivement, de manière à ce que lesdites première et seconde masses excentriques (5 et 6) tournent en antiphase.

24. Agitateur portatif (S) selon les revendications 22 et 23, dans lequel lesdits moyens de commande peuvent maintenir une relation de phase entre lesdits deux moteurs d'actionnement (7), de préférence une relation d'antiphase.
